# EUROPEAN PATENT APPLICATION

(11) **EP 3 293 053 A1**
(43) Date of publication of application: **14.03.2018**
(21) Application number: 16789550.7
(22) Date of filing: 28.04.2016
(51) Int. Cl.: B60R 1/06, B60R 1/00, H02J 1/00

(54) **VEHICLE VISUAL-RECOGNITION CONTROL DEVICE**

(30) Priority: 07.05.2015 JP 2015094750
(71) Applicant: Kabushiki Kaisha Tokai-Rika-Denki-Seisakusho, Niwa-gun, Aichi 480-0195 (JP)
(72) Inventor: MIYAZAKI, Shinichi, Niwa-gun Aichi 480-0195 (JP); NAGAO, Takashi, Niwa-gun Aichi 480-0195 (JP); KOBAYASHI, Fumikazu, Niwa-gun Aichi 480-0195 (JP); KONDO, Juntaro, Niwa-gun Aichi 480-0195 (JP)
(74) Representative: TBK
(86) International application number: PCT/JP2016/063443
(87) International publication number: WO 2016/178414

(57) **Abstract**

A vehicular visual recognition control device includes an in-out motor, an in-out sensor (24), an ECU (12), and a power control section (56). The in-out motor is configured to change a position of a mirror surface in order to visually recognize the vehicle surroundings. The in-out sensor is configured to detect a position of the mirror surface using changes in the in-out motor based on a resistance value of a sliding resistance having a resistance value that changes according to the position of the mirror surface. The ECU is configured to control the in-out motor based on a detection result of the in-out sensor so as to change the position of the mirror surface to a predetermined target position in cases in which a predetermined condition for changing the position of the mirror surface section is satisfied. The power control section is configured to predict a time to arrival at the target position, and to control powering of the sliding resistance so as to restart powering after powering of a sliding resistance R had been stopped until prior to the predicted time to arrival at the target position.

## Description

### Technical Field

The present invention relates to a vehicular visual recognition control device to control a visual recognition section, such as a door mirror or camera, for visual recognition of vehicle surroundings.

### Background Art

Visual recognition sections, such as mirrors or cameras, are provided to vehicles for visual recognition of vehicle surroundings. Such visual recognition sections change the visual recognition range by, for example, changing the position of the mirror surface, changing the imaging direction by moving the camera, or the like. Moreover, a sensor is provided to detect the position of the visual recognition section, such as a mirror or camera, in order to change the position of the mirror surface or the imaging direction.

Moreover, in Japanese Patent Application Laid-Open (JP-A) Nos. 2001-345155 and 2001-4978, there are proposals to reduce power consumption of electrical devices by limiting power during time bands when power is not required, powering at prescribed time intervals, and the like.

### SUMMARY OF INVENTION

### Technical Problem

Sensors using sliding resistance or the like are known as sensors for detecting the position of a visual recognition section, such as a mirror or camera. Such sliding resistance types of sensors have a problem with precision and durability due to wearing from contact point abrasion due to sliding, contact point arcing, or the like. Similarly to with the reduction in power consumption described in JP-A Nos. 2001-345155 and 2001-4978, conceivably the occurrence of arcs might be suppressed and contact point abrasion might be suppressed by limiting power when power is not required.

However, power cannot easily be limited due to the visual recognition section, such as a mirror or camera, being moved to a target position while the position of the visual recognition section is being detected.

In consideration of the above circumstances, an object of the present invention is to suppress contact point abrasion in a configuration in which the position of a visual recognition section is detected by a sliding type of detection section.

### Solution to Problem

To achieve the above object, an aspect of the present invention is a vehicular visual recognition control device including a change section, a detection section, a controller, and a power control section. The change section is configured to change a position of a visual recognition section in order to visually recognize the vehicle surroundings. The detection section is configured to detect a position of the visual recognition section based on a resistance value of a sliding resistance having a resistance value that changes according to the position of the visual recognition section. The controller is configured to control the change section based on a detection result of the detection section so as to change the position of the visual recognition section to a predetermined target position in cases in which a predetermined condition for changing the position of the visual recognition section is satisfied. The power control section is configured to predict a time to arrival at the target position, and to control powering of the sliding resistance so as to restart powering after powering of the sliding resistance had been stopped until prior to the predicted time to arrival at the target position.

According to the aspect of the present invention, the change section is configured to change the position of the visual recognition section in order to visually recognize the vehicle surroundings. For example, the position of the visual recognition section, such as a mirror surface or a camera, is changed by the change section.

The detection section is configured to detect the position of the visual recognition section based on the resistance value of the sliding resistance having a resistance value that changes according to the position of the visual recognition section.

The controller is configured to control the change section based on the detection result of the detection section so as to change the position of the visual recognition section to the predetermined target position in cases in which a predetermined condition for changing the position of the visual recognition section is satisfied.

Note that the detection section detecting the position of the visual recognition section based on the resistance value of the sliding resistance causes abrasion, due arcing at the contact point of sliding resistance and the like. Accordingly, in the power control section, the time to arrival at the target position is predicted, and powering of the sliding resistance is controlled so as to restart powering after powering of the sliding resistance had been stopped until prior to the predicted time to arrival at the target position. This enables arcing to be suppressed from occurring at the contact point of the sliding resistance and abrasion at the contact point to be suppressed compared to cases in which the sliding resistance is continuously powered.

Note that the vehicular visual recognition control device may further include a correction section configured to correct the time to arrival according to at least one of a voltage applied to the change section or an ambient temperature. Namely, an accurate time to arrival can be predicted even when the change speed of the change section changes and the time to arrival fluctuates due to voltage, temperature, or the like.

Further, the power control section may predict the time to arrival of a next time based on a difference between the actual time to arrival and the predicted time to arrival. Namely, the difference between the actual time to arrival and the predicted time to arrival can be learned so as to predict an accurate time to arrival even when the change speed of the change section changes with the passage of time.

Moreover, in cases in which a predetermined condition has been satisfied, after powering the sliding resistance and after the detection section has detected a current position of the visual recognition section, the power control section may control to stop powering of the sliding resistance, and to power the sliding resistance so as to restart powering a prescribed time prior to the predicted time to arrival. This enables power to be stopped in cases in which position detection by the detection section is not required, and enables powering to be restarted and the position of the change section to be detected reliably when checking of the target position is required.

Furthermore, a condition expressing at least one of turning of a vehicle or reversing of a vehicle may be applied as the predetermined condition.

### Advantageous Effects of Invention

The aspect of the present invention explained above has the advantageous effect of enabling contact point abrasion to be suppressed in a configuration in which the position of a visual recognition section is detected by a sliding type of detection section.

### BRIEF DESCRIPTION OF DRAWINGS

Fig. 1 is an external view of a vehicular-door mirror device subject to control by a door mirror control device according to an exemplary embodiment of the present invention.
Fig. 2 is a cross-section (taken along line 2-2 of Fig. 1) of relevant portions of a vehicular-door mirror device as viewed from up in a vehicle up-down direction (from above a vehicle).
Fig. 3 is a block diagram illustrating a configuration of a control system of a vehicular-door mirror control device according to an exemplary embodiment.
Fig. 4 is a diagram to explain turning-interlocked mirror control.
Fig. 5 is a diagram illustrating a manner in which a region of a visual recognition range is changed according to turning amount.
Fig. 6 is a functional block diagram illustrating functions performed by an ECU in order to control powering of an in-out sensor.
Fig. 7 is a flowchart illustrating an example of a flow of sensor power processing performed by an ECI of a vehicular-door mirror control device according to an exemplary embodiment.
Fig. 8 is flowchart illustrating an example of correction processing performed by a correction section.
Fig. 9 is flowchart illustrating an example of flow of learning processing performed by a target arrival time prediction section.

### DESCRIPTION OF EMBODIMENTS

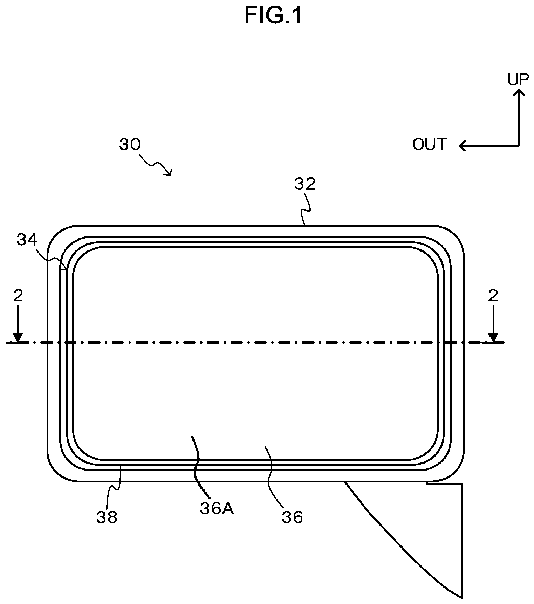

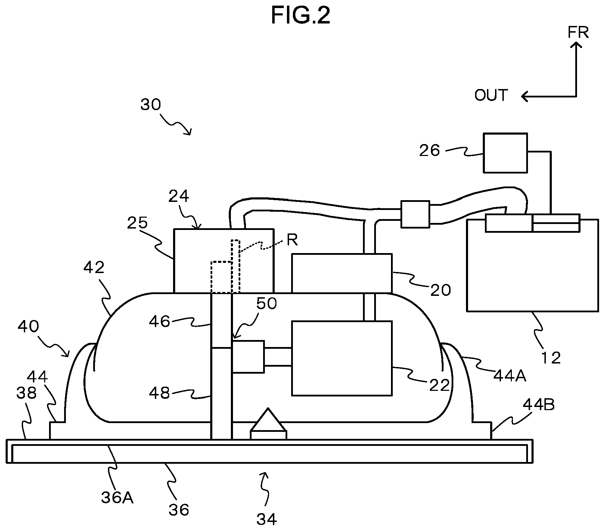

Detailed description follows regarding an example of an exemplary embodiment of the present invention, with reference to the drawings. Note that the following is a description of a vehicular-door mirror control device serving as an example of a vehicular visual recognition control device of the present invention. Fig. 1 is an external view of a vehicular-door mirror device subject to control by a door mirror control device according to the exemplary embodiment of the present invention. Fig. 2 is a cross-section (taken along line 2-2 of Fig. 1) of relevant portions of a vehicular-door mirror device as viewed from up in a vehicle up-down direction (from above a vehicle). Note that in the drawings arrow FR indicates a vehicle forward direction, arrow OUT indicates outwards in a vehicle width direction (vehicle left direction), and arrow UP indicates upward.

A vehicular-door mirror device 30 is installed at a front end outer side of an up-down direction intermediate portion of a door (front door) of a vehicle.

As illustrated in Fig. 1, the vehicular-door mirror device 30 includes a visor 32 having a substantially cuboidal-container shape and serving as an outer peripheral member. A vehicle width direction inside portion of the visor 32 is supported by a door (vehicle body side) such that the vehicular-door mirror device 30 is installed to the door. The inside of the visor 32 is open toward the vehicle rear side.

A substantially rectangular plate shaped mirror 34 is provided inside the visor 32, and the mirror 34 is disposed in the open portion of the visor 32. A mirror body 36 (mirror body) is provided at a vehicle rear side portion of the mirror 34, and a reflective film on a vehicle rear side face of the mirror body 36 configures a mirror surface 36A. Namely, vehicle surroundings can be checked using the mirror surface 36A serving as a visual recognition section. The vehicle front side and outer periphery of the mirror body 36 is covered by a mirror holder 38 (mirror holder outer).

As illustrated in Fig. 2, an electric mirror surface adjuster unit 40 is provided inside the visor 32.

A substantially semicircular container shaped case 42 is provided at a vehicle front side portion of the mirror surface adjuster unit 40, and the inside of the case 42 is open on the vehicle rear side. The case 42 is supported by the visor 32, and the mirror surface adjuster unit 40 is thereby supported by the visor 32.

A tilting body 44 (mirror holder inner) is provided to a vehicle rear side portion of the mirror surface adjuster unit 40, and the tilting body 44 is retained on the case 42 such that the tilting body 44 is capable of tilting (swinging, pivoting). A substantially cylindrical shaped slide tube 44A is provided on the tilting body 44. The slide tube 44A gradually gets smaller in diameter on progression toward the vehicle front side, and is slideable against a peripheral wall of the case 42. A substantially circular disk shaped mounting plate 44B is integrally provided at the vehicle rear side end of the slide tube 44A. The mirror holder 38 of the mirror 34 is detachably mounted at the vehicle rear side of the mounting plate 44B. The mirror 34 is thereby able to tilt with respect to the case 42, as a single unit together with the tilting body 44, about a center of gravity position (face center position of the mirror surface 36A).

An up-down motor (not illustrated in the drawings) and an in-out motor 22 serving as a change section are fixed inside the case 42. A rod shaped up-down rod (not illustrated in the drawings) and an in-out rod 48 are connected to the up-down motor and the in-out motor 22, respectively, through a gear mechanism 50, serving as a mechanical mechanism. The up-down rod and the in-out rod 48 are retained so as to be capable of sliding (moving) in a vehicle front-rear direction (axial direction) inside the case 42. The leading end (vehicle rear side end) of the up-down rod is pivotally retained on the mounting plate 44B above (or alternatively below) the center of gravity position of the mirror 34. The leading end (vehicle rear side end) of the in-out rod 48 is pivotally retained on the mounting plate 44B at the vehicle width direction outside (or alternatively at the vehicle width direction inside) of the center of gravity position of the mirror 34.

The up-down motor and the in-out motor 22 are electrically connected to an ECU 12 (mirror ECU) serving as a controller through a mirror surface driver 20. The ECU 12 is provided inside the visor 32 or on the vehicle body side, and an adjustment operation device 26 is electrically connected to the ECU 12. When the adjustment operation device 26 is operated by a vehicle occupant (in particular by the driver), the mirror surface adjuster unit 40 is operated by control from the ECU 12, and the up-down rod and the in-out rod 48 are slid in the vehicle front-rear direction by driving the up-down motor and the in-out motor 22, tilting the tilting body 44 and the mirror 34 with respect to the case 42. The tilt position of the mirror 34 is thereby adjusted, and the angle of the mirror surface 36A of the mirror 34 (the direction the mirror surface 36A faces) is adjusted.

When the up-down rod is slid toward the vehicle front, the tilting body 44 and the mirror 34 tilt up (in an upward facing direction), and the mirror surface 36A of the mirror 34 is tilted in an upward facing direction. When the up-down rod is slid toward the vehicle rear, the tilting body 44 and the mirror 34 tilt down (in a downward facing direction), and the mirror surface 36A of the mirror 34 is tilted in a downward facing direction. When the in-out rod 48 is slid toward the vehicle front, the tilting body 44 and the mirror 34 are tilted out (in an outward facing direction), and the mirror surface 36A of the mirror 34 is tilted in an outward facing direction of the vehicle width direction. When the in-out rod 48 is slid toward the vehicle rear, the tilting body 44 and the mirror 34 are tilted inward (in an inward facing direction), and the mirror surface 36A of the mirror 34 is tilted in an inward facing direction of the vehicle width direction.

As illustrated in Fig. 2, an up-down sensor (not illustrated in the drawings) and an in-out sensor 24 serving as a detection section are provided to the case 42. The up-down sensor and the in-out sensor 24 are each electrically connected to the ECU 12. A substantially cuboidal-box shaped housing 25 is provide to each of the up-down sensor and the in-out sensor 24. The up-down sensor and the in-out sensor 24 are fixed to the case 42 by the housing 25 being fixed to the outside of the bottom wall of the case 42.

Rod shaped detection rods 46 are provided in the housing 25 so as to be sildeable in the vehicle front-rear direction (axial direction). The detection rods 46 project out from the housing 25 toward the vehicle rear side and are biased toward the vehicle rear side. The detection rods 46 are inserted into the case 42 so as to penetrate through the bottom wall of the case 42. The detection rods 46 of the up-down sensor and the in-out sensor 24 are coaxially disposed at the vehicle front side of the up-down rod and the in-out rod 48, respectively. Due to biasing force, the leading ends (vehicle rear side ends) of the detection rods 46 of the up-down sensor and the in-out sensor 24 make contact with the base ends (vehicle front side ends) of the up-down rod and the in-out rod 48, respectively. The detection rods 46 of the up-down sensor and the in-out sensor 24 are always slideable in the vehicle front-rear direction as single bodies together with the up-down rod and the in-out rod 48, respectively. Thus, by the up-down sensor and the in-out sensor 24 detecting the slide position of the respective detection rods 46 in the vehicle front-rear direction, the up-down sensor and the in-out sensor 24 detect the slide position of the up-down rod and the in-out rod 48 in the vehicle front-rear direction, thereby detecting the tilt position of the mirror 34 in the up-down direction and the in-out direction. Specifically, the up-down sensor and the in-out sensor 24 are each equipped with a sliding resistance R, and the tilt position of the mirror 34 in the up-down direction and the in-out direction is detected by the ECU 12 detecting the resistance values of the sliding resistances R as they change due to movement of the detection rods 46.

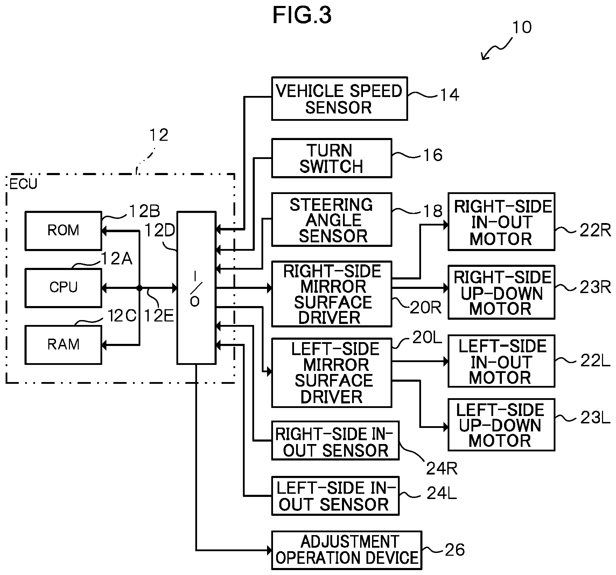

Fig. 3 is a block diagram illustrating a configuration of a control system of a vehicular-door mirror control device 10 according to the present exemplary embodiment.

The vehicular-door mirror control device 10 is equipped with the ECU 12, as described above. The ECU 12 is configured by a microcomputer including a CPU 12A, ROM 12B, RAM 12C, and an input/output interface (I/O) 12D, connected together through a bus 12E.

A turning-interlocked mirror control program, described later, and various data, such as various tables, numerical formulae, and the like are stored in the ROM 12B. Control to interlock turning and to move the mirror surface 36A of the mirror 34 is performed by expanding the program stored in the ROM 12B into the RAM 12C, and by executing the expanded program using the CPU 12A. Note that as well as the turning-interlocked mirror control program, programs, described later, for performing sensor power processing, correction processing, learning processing, and the like are also examples of programs stored in the ROM 12B.

A vehicle speed sensor 14, turning switches 16, and a steering angle sensor 18 are connected as a detection section to the I/O 12D. Moreover, a right-side mirror surface driver 20R, a left-side mirror surface driver 20L, a right-side in-out sensor 24R, a left-side in-out sensor 24L, and the adjustment operation device 26 described above are also connected to the I/O 12D.

The vehicle speed sensor 14 detects the travelling speed of the vehicle (referred to as the vehicle speed below), and inputs the detection results to the ECU 12.

The turning switches 16 are switches to instruct illumination of turn indicators, and the instructions to illuminate the left and right turn indicators are input to the ECU 12. The ECU 12 is thereby able to determine an intention of an occupant to turn, based on the signals of the turning switches 16.

The steering angle sensor 18 detects the steering angle of the steering wheel (referred to as the steering angle below), and inputs the detection results of the steering angle to the ECU 12.

A right-side up-down motor 23R and a right-side in-out motor 22R are connected to the right-side mirror surface driver 20R, and the right-side up-down motor 23R and the right-side in-out motor 22R are driven according to instructions from the ECU 12. A left-side up-down motor 23L and a left-side in-out motor 22L are connected to the left-side mirror surface driver 20L, and the left-side up-down motor 23L and the left-side in-out motor 22L are driven according to instructions from the ECU 12.

The right-side in-out sensor 24R detects the tilt position of the right-side mirror 34 in the in-out direction, and the left-side in-out sensor 24L detects the tilt position of the left-side mirror 34 in the in-out direction. The detection results thereof are each input to the ECU 12. Specifically, the in-out sensor 24 inputs the ECU 12 with detection results of voltage corresponding to the resistance values of the sliding resistances R. Namely, due to the resistance values of the sliding resistances R changing according to the tilt position of the mirror 34, the tilt position of the mirror 34 is detected by the ECU 12 detecting, as the detection results, the resistance values of the sliding resistances R from the voltage. Note that although not illustrated in the drawings, there are also up-down sensors that are provided to correspond to each of the left and right-side mirrors 34 and that are connected to the ECU 12.

Explanation follows regarding the turning-interlocked mirror control performed in the vehicular-door mirror control device 10 according to the present exemplary embodiment.

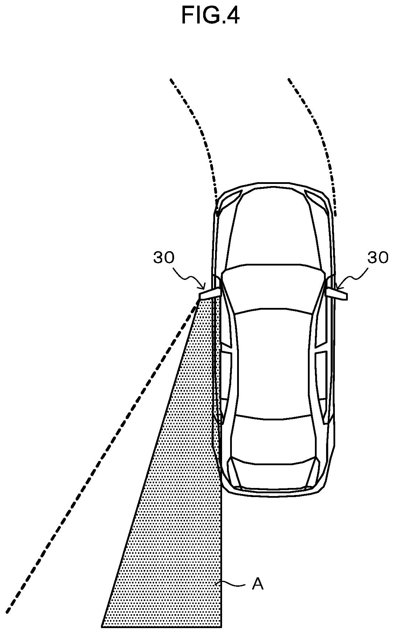

Fig. 4 is a diagram to explain the turning-interlocked mirror control.

The turning-interlocked mirror control is performed by the ECU 12 executing the turning-interlocked mirror control program stored in the ROM 12B.

When performing a turn, such as a right turn or a left turn, the occupant checks the vehicular-door mirror device 30 to check out for interaction with a bicycle or the like. However, after starting to turn, the range of the vehicular-door mirror device 30 providing visual recognition of the vehicle surroundings to the occupant moves, according to turning, so as to move away from the region subject to checking out for interaction with a bicycle or the like.

Due to the checking subject moving away from the visual recognition range during vehicle turning in this manner, in the turning-interlocked mirror control, the mirror surface 36A of the mirror 34 is tilted in lock step to the vehicle turning, so as to control to change the visual recognition range.

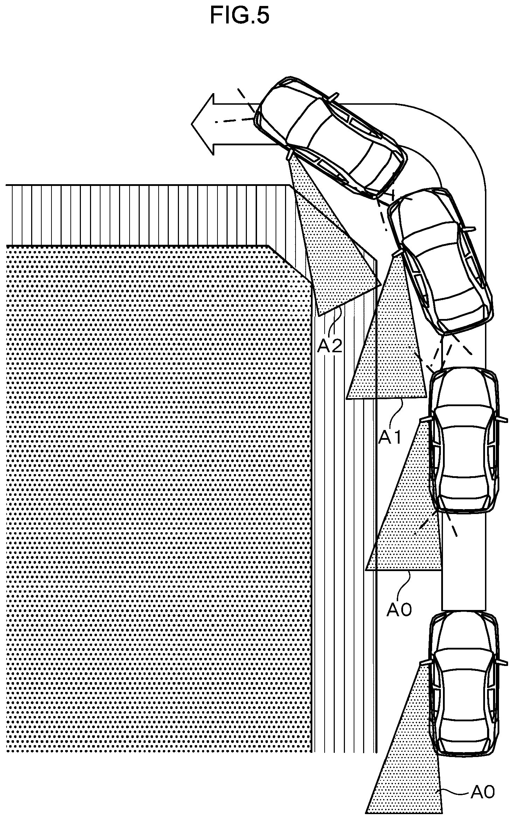

More specifically, in a normal state, such as a straight ahead state, a region A of a visual recognition range illustrated in Fig. 4 is pre-set by the occupant at a position for visual recognition. Then when turning, the turning amount is detected from the detection results of the vehicle speed sensor 14 and the steering angle sensor 18. The ECU 12 then controls driving of the in-out motor 22 so as to tilt the mirror surface 36A according to the detected turning amount, and to move the region A of the visual recognition range toward the broken line in Fig. 4. Thereby, as illustrated in Fig. 5, the visual recognition range is changed from a region A0, to regions A1, A2 according to the turning amount, enabling checking out for interaction to be reliably performed during turning.

The conditions for changing the visual recognition range under the turning-interlocked mirror control may, for example, be when one of the turning switches 16 is ON, when the vehicle speed is a predetermined threshold value or lower, and the steering angle is a predetermined threshold value or greater, however there is no limitation thereto. For example, the detection results or the like of other sensors, such as an acceleration sensor or the like, may be employed as a condition for changing.

Note that tilting of the mirror surface 36A according to the turning amount is controlled by pre-storing movement amounts of the mirror surface 36A associated with turning amounts in the ECU 12, and reading the movement amount corresponding to the turning amount.

By the way, in the turning-interlocked mirror control of the present exemplary embodiment, although the position of the mirror surface is detected by the in-out sensor 24 to control the mirror surface position, due to the in-out sensor 24 detecting the mirror surface position using the sliding resistances R in the manner described above, there might be a problem with precision and durability due to contact point abrasion of the sliding resistances R.

Thus, in the present exemplary embodiment, abrasion due to arcing at the contact points of the sliding resistances R is suppressed by control to only power the in-out sensor 24 when power is required.

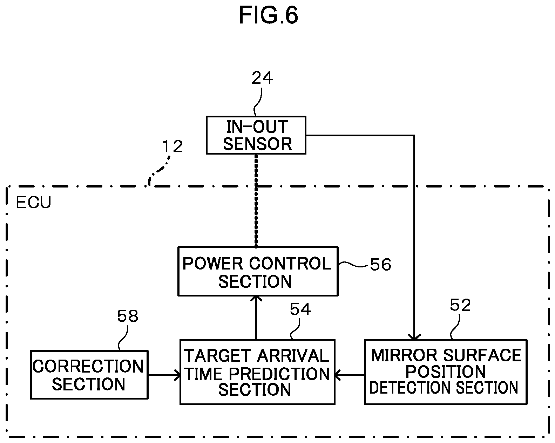

Specifically, under the turning-interlocked mirror control, the in-out sensor 24 is powered and the current position of the mirror surface 36A is detected when the conditions for changing the visual recognition range are satisfied and operation is started, the time to arrival at a target position is predicted, and powering of the in-out sensor 24 is interrupted prior to the time to arrival at the target position. The powering of the in-out sensor 24 is then restarted at a prescribed time before the predicted time to arrival at the target position so as to detect the target position. More specifically, the ECU 12 is equipped with the functionality illustrated in Fig. 6 to perform the control described above. Fig. 6 is a functional block diagram illustrating functions performed by the ECU 12 in order to control powering of an in-out sensor 24.

The ECU 12 is equipped with the functionality of a mirror surface position detection section 52, a target arrival time prediction section 54, a power control section 56, and a correction section 58. Each of the functions of the ECU 12 will now be explained as functions executed by programs in the present exemplary embodiment; however, the functions may be performed by hardware.

The mirror surface position detection section 52 detects the mirror surface position by detecting the resistance values of the sliding resistances R as the detection results of the in-out sensor 24. Namely, the mirror surface position is detected from the resistance values by pre-storing mirror surface positions in association with resistance values of the sliding resistances.

The target arrival time prediction section 54 predicts the time to arrival at the target position based on a distance from the mirror surface position detected by the mirror surface position detection section 52 to the target position, and on the operation speed of the in-out motor 22. Note that the position corresponding to the movement amount of the mirror surface 36A so as to correspond to the turning amount is taken as the target position.

The power control section 56 controls to interrupt powering of the in-out sensor 24 until a prescribed time (for example, several hundred ms) prior to the time to arrival at the target position predicted by the target arrival time prediction section 54, and controls powering of the in-out sensor 24 so as to restart powering when close to the target position so as to enable the mirror surface to be stopped at the target position. Note that the broken line illustrated in Fig. 6 indicates a power supply line. Moreover, the prescribed time is set as a time enabling powering of the in-out sensor 24 prior to the target position even if speed fluctuations occur in the in-out motor 22.

Moreover, for the time to arrival at the target position, due to the operation speed of the in-out motor 22 changing according to the voltage, ambient temperature, or the like, the correction section 58 accordingly detects at least one out of a voltage applied to the in-out motor 22 or the ambient temperature, so as correct the time to arrival at the target position according to the detection results. For example, the correction section 58 predetermines voltages such as a high voltage, a normal voltage, and a low voltage, and does not correct when at the normal voltage, corrects a predicted time to arrival with a negative correction when at the high voltage, and corrects the predicted time to arrival with a positive correction when at the low voltage. Moreover, the correction section 58 predetermines temperatures such as a high temperature, a normal temperature, and a low temperature, does not correct when at the normal temperature, corrects the predicted time to arrival with a negative correction when at the high temperature, and corrects the predicted time to arrival with a positive correction when at the low temperature.

Furthermore, the correction section 58 is equipped with functionality to check differences between the predicted time to arrival and the actual time to arrival, and to learn so as to reflect this in subsequent prediction. For example, correction is made when computing the next predicted time to arrival based on the difference between the predicted time to arrival and the actual time to arrival.

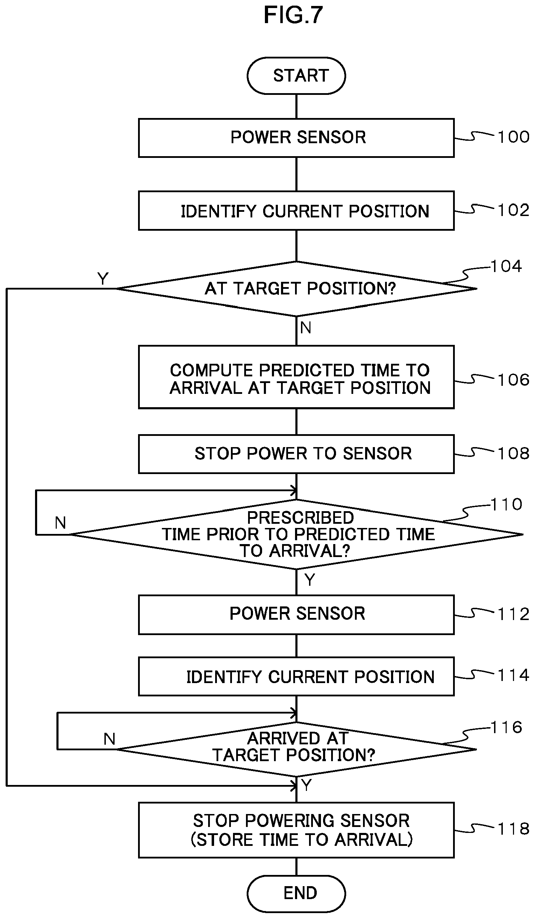

Next, explanation follows regarding specific processing performed by the ECU 12 of the vehicular-door mirror control device 10 according to the present exemplary embodiment configured as described above. Fig. 7 is a flowchart illustrating an example of flow of sensor powering processing performed by the ECU 12 of the vehicular-door mirror control device 10 according to the present exemplary embodiment. Note that an example will be explained in which the processing of Fig. 7 is, for example, started when the conditions for changing the visual recognition range by the turning-interlocked mirror control are satisfied.

First, at step 100, the power control section 56 starts powering the in-out sensor 24, and processing transitions to step 102.

At step 102, the mirror surface position detection section 52 detects the current mirror surface position based on the detection results of the in-out sensor 24, namely, on the resistance values of the sliding resistances R, and then processing transitions to step 104.

At step 104, the target arrival time prediction section 54 determines whether or not the current mirror surface position is the target position. Processing transitions to step 106 in cases in which this determination is negative, and transitions to step 118 in cases in which this determination is affirmative.

At step 106, the target arrival time prediction section 54 computes the predicted time to arrival to the target position, and processing transitions to step 108. Namely, the target arrival time prediction section 54 predicts the time to arrival at the target position based on the distance from the mirror surface position detected by the mirror surface position detection section 52 to the target position, and on the operation speed of the in-out motor 22. Note that in the present exemplary embodiment, the predicted time to arrival is predicted by performing correction using correction processing, described later.

At step 108, the power control section 56 stops powering the in-out sensor 24, and processing transitions to step 110.

At step 110, the power control section 56 determines whether or not it has become the prescribed time prior to the predicted time to arrival. Standby is adopted until this determination is affirmative, and then processing transitions to step 112. Namely, powering the in-out sensor 24 is restarted, and standby is adopted until it has become the prescribed time enabling checking of the target position, and then processing transitions to step 112.

At step 112, the power control section 56 restarts powering the in-out sensor 24, and processing transitions to step 114.

At step 114, the mirror surface position detection section 52 detects the current mirror surface position based on the detection results of the in-out sensor 24, namely, on the resistance values of the sliding resistances R, and then processing transitions to step 116.

At step 116, the mirror surface position detection section 52 determines whether or not the mirror surface position has arrived at the target position, and standby is adopted until this determination is affirmative, then processing transitions to step 118.

At step 118, the power control section 56 stops powering the in-out sensor 24, thereby completing one cycle of processing. Note that when this occurs, the actual time to the target position is stored in the ECU 12 for use in the learning processing, described later.

In this manner, by controlling the powering of the in-out sensor 24, the ECU 12 is able to move the mirror surface to the target position while powering the in-out sensor 24 only when required. Thus, since the in-out sensor 24 is powered only as required, abrasion due to arcing at the contact points of the sliding resistances R can be suppressed.

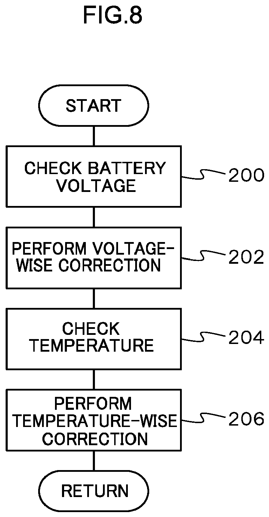

Next, explanation follows regarding the correction processing performed by the correction section 58 of the ECU 12. Fig. 8 is a flowchart illustrating an example of flow of the correction processing performed by the correction section 58. Note that the processing of Fig. 8 is performed when the predicted time to arrival to the target position is computed at above step 106.

At step 200, the correction section 58 checks the voltage of a battery to operate the in-out motor 22, and processing transitions to step 202.

At step 202, the correction section 58 performs voltage-wise correction, and processing transitions to step 202. For example, the correction section 58 stores in advance coefficients corresponding to respective predetermined voltages such as a high voltage, a normal voltage, and a low voltage. These coefficients do not correct when at the normal voltage (a coefficient of 1), a coefficient to correct the predicted time to arrival with a negative correction when at the high voltage, and a coefficient to correct the predicted time to arrival with a positive correction when at the low voltage. The correction section 58 accordingly reads the coefficient corresponding to the voltage, and corrects the predicted time to arrival by multiplying the predicted time to arrival by the read coefficient.

At step 204, the correction section 58 checks the temperature of the operating environment of the in-out motor 22, and processing transitions to step 206.

At step 206, the correction section 58 performs temperature-wise correction and then processing returns to the correction processing. For example, the correction section 58 stores in advance coefficients corresponding to respective predetermined temperatures such as a high temperature, a normal temperature, and a low temperature. These coefficients do not correct when at the normal temperature (a coefficient of 1), a coefficient to correct the predicted time to arrival with a negative correction when at the high temperature, and a coefficient to correct the predicted time to arrival with a positive correction when at the low temperature. The correction section 58 accordingly reads the coefficient corresponding to the temperature, and corrects the predicted time to arrival by multiplying the predicted time to arrival by the read coefficient.

Performing correction processing in this manner enables an accurate time to arrival at the target position to be predicted even when the speed of the in-out motor 22 fluctuates due to voltage or temperature.

Note that although explanation has been given of an example of the correction processing of the present exemplary embodiment in which the predicted time to arrival is corrected by multiplying the predicted time to arrival by a coefficient, alternatively a change speed of the in-out motor 22 may be corrected.

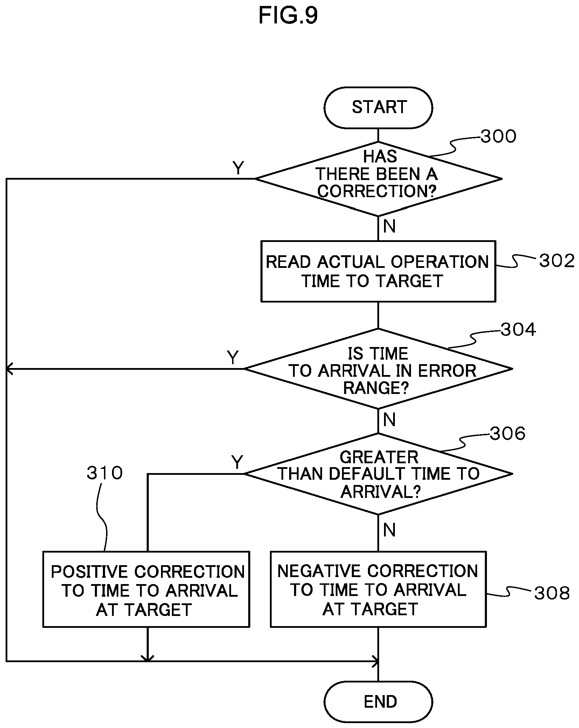

Next, explanation follows regarding the learning processing performed by the target arrival time prediction section 54 to reflect the correction results to the predicted time to arrival, in the predicted time to arrival of a next time. Fig. 9 is a flowchart illustrating an example of flow of the learning processing performed by the target arrival time prediction section 54. Note that the processing of Fig. 9 is, for example, performed after completing the sensor powering processing described above.

At step 300, the target arrival time prediction section 54 determines whether or not correction has been performed using the correction section 58. Processing transitions to step 302 when this determination is negative, and one cycle of processing is completed without performing the predicted time to arrival learning processing when this determination is affirmative.

At step 302, the target arrival time prediction section 54 reads the actual operation time to the target, and processing transitions to step 304. Namely, the actual times to the target position are read, which were stored at step 118 of the sensor powering processing described above.

At step 304, the target arrival time prediction section 54 determines whether or not the time to arrival that is the read actual operation time lies within a predetermined error range. Processing transitions to step 306 when this determination is negative, and one cycle of processing is completed without performing the predicted time to arrival learning processing when this determination is affirmative.

At step 306, the target arrival time prediction section 54 determines whether or not the actual operation time that was read is greater than a default time to arrival. Processing transitions to step 308 when this determination is negative, and processing transitions to step 310 when this determination is affirmative. Note that this determination is determination as to whether or not the actual operation time that was read is greater than the error range of the default time to arrival, with negative determination made when less than the default time to arrival minus an error time (for example, 50 ms), and affirmative determination made when greater than the default time to arrival plus the error time (for example, 50 ms).

At step 308, the target arrival time prediction section 54 sets such that the time to arrival at the target position is computed the next time by negative correction, and completes one cycle of learning processing.

On the other hand, at step 310, the target arrival time prediction section 54 sets such that the time to arrival at the target position is computed the next time by positive correction, and completes one cycle of learning processing.

The correction setting for when computing the predicted time to arrival of the next time changes slowly with the passage of time, and so a learning correction amount for a single operation is set small so as to correct gradually. For example, if the predicted time to arrival to the target position is 2000 ms, the actual time to arrival is 2500 ms, and the correction amount is 30%, then correction is by (2500 ms - 2000 ms) × 30% = 150 ms. Note that although explanation has been given of an example of the learning processing of the present exemplary embodiment in which, similarly to in the correction processing, and the predicted time to arrival is corrected by multiplying the predicted time to arrival by a coefficient, alternatively a change speed of the in-out motor 22 may be corrected.

Performing such learning processing enables an accurate time to arrival at the target position to be predicted even when the speed of the in-out motor 22 fluctuates with the passage of time.

Note that although explanation has been given of an example of the present exemplary embodiment in which the conditions for changing the visual recognition range are when detected that one of the turning switches 16 is ON, that the vehicle speed is a prescribed vehicle speed or lower, and that the steering angle is a prescribed steering angle or greater, there is no limitation thereto, and navigation information or the like from a navigation unit may be included in the conditions for changing. Alternatively, the conditions for changing may be when detected that one of turning switches is ON and that the vehicle speed is a prescribed vehicle speed or lower, or may be when detected that one of the turning switches is ON and that the steering angle is a prescribed steering angle or greater.

Moreover, although explanation has been given of an example of the present exemplary embodiment in which the visual recognition range is changed in lock step to turning, there is no limitation thereto. For example, application may be made to cases in which the visual recognition range is changed in lock step to reversing.

Moreover, although in the exemplary embodiment, the current position is detected and powering of the in-out sensor 24 is stopped when the conditions for changing the visual recognition range are satisfied, the timing for stopping power is not limited thereto. For example, in cases in which the current position of the mirror surface 36A has not moved from when previously detected, or the like, stopping powering the in-out sensor 24 may be started prior to the conditions for changing the visual recognition range being satisfied.

Moreover, the present invention is obviously not limited to the above, and various modifications other than these may be implemented within a range not departing from the main spirit thereof.

The entire disclosure of Japanese Patent Application No. 2015-094750 filed on May 7, 2015 is incorporated by reference in the present specification.

## Claims

1. A vehicular visual recognition control device comprising:
a change section configured to change a position of a visual recognition section that is configured to visually recognize the vehicle surroundings;
a detection section configured to detect a position of the visual recognition section based on a resistance value of a sliding resistance having a resistance value that changes according to the position of the visual recognition section;
a controller configured to control the change section based on a detection result of the detection section so as to change the position of the visual recognition section to a predetermined target position in cases in which a predetermined condition for changing the position of the visual recognition section is satisfied; and
a power control section configured to predict a time to arrival at the target position, and to control powering of the sliding resistance so as to restart powering after powering of the sliding resistance had been stopped until prior to the predicted time to arrival at the target position.

2. The vehicular visual recognition control device of claim 1, further comprising a correction section configured to correct the time to arrival according to at least one of a voltage applied to the change section or an ambient temperature.

3. The vehicular visual recognition control device of claim 1 or claim 2, wherein the power control section predicts the time to arrival of a next time, based on a difference between the actual time to arrival and the predicted time to arrival.

4. The vehicular visual recognition control device of any one of claim 1 to claim 3, wherein, in cases in which the predetermined condition has been satisfied, after powering the sliding resistance and after the detection section has detected a current position of the visual recognition section, the power control section controls to stop powering of the sliding resistance, and to power the sliding resistance so as to restart powering a prescribed time prior to the predicted time to arrival.

5. The vehicular visual recognition control device of any one of claim 1 to claim 4, wherein the predetermined condition is a condition expressing at least one of turning of a vehicle or reversing of a vehicle.
